# EUROPEAN PATENT APPLICATION

(11) **EP 2 072 876 A1**
(43) Date of publication of application: **24.06.2009**
(21) Application number: 07859941.2
(22) Date of filing: 21.12.2007
(51) Int. Cl.: F16L 19/08, F25B 41/00

(54) **PIPE JOINT, REFRIGERATING DEVICE, AND HEAT PUMP WATER WARMING DEVICE**

(30) Priority: 27.12.2006 JP 2006352614; 11.09.2007 JP 2007235994
(71) Applicant: Daikin Industries, Ltd., Osaka 530-8323 (JP)
(72) Inventor: NAKATA, Haruo, Sakai-shi Osaka 591-8511 (JP)
(74) Representative: HOFFMANN EITLE
(86) International application number: PCT/JP2007/074661
(87) International publication number: WO 2008/078683

(57) **Abstract**

A pipe joint has a joint body 1 attached to a device to which a pipe p is connected, a coupling member 2 threaded with the joint body 1, and a fastening jig 3 through which rotational torque is transmitted to the coupling member 2. The outer surface of the coupling member 2 is round so that the coupling member 2 cannot be held by a tool. The rotational torque is applied to the fastening jig 3 from the exterior by means of the tool. After the coupling member 2 is fastened to the joint body 1, the fastening jig 3 is removed from the coupling member 2.

## Description

### TECHNICAL FIELD

The present invention relates to a pipe joint, and, more particularly, to a pipe joint having a joint body attached to a device to which a pipe is connected and a coupling member arranged around the pipe connected to the joint body, a refrigerating device employing the pipe joint in refrigerant circuits, and a heat pump water warming device.

### BACKGROUND ART

In a refrigerant pipe of a refrigerating device or a heat pump water warming device, a flared pipe joint disclosed in Patent Document 1 and a bite-in type pipe joint disclosed in Patent Documents 1 and 2 are used as pipe joints having a joint body and a coupling member, which is arranged around a pipe connected to the joint body. The coupling member of the pipe joint is fastened completely by fastening the coupling member using a tool such as a spanner or a wrench until torque reaches a predetermined value. When the coupling member is fastened completely, the connection of the pipe is accomplished. The pipe joint is thus used in this state. Accordingly, by loosening the pipe joint by means of the tool used in connecting the pipe, the pipe can be removed easily by any person.

Conventionally, chlorofluorocarbon has been often used as refrigerant of a refrigerating device. However, since the substance leads to ozone layer depletion or global warming after having been released to the atmosphere, the regulations on the use of chlorofluorocarbon is increasingly strict. A structure that prevents a pipe that has been joined through a pipe joint from being easily removed is sought.
Patent Document 1: Japanese Laid-Open Patent Publication No. 2003-74769
Patent Document 2: Japanese National Phase Laid-Open Patent Publication No. 2004-526911

### DISCLOSURE OF THE INVENTION

Accordingly, it is an objective of the present invention to provide a pipe joint that can comply with regulations on chlorofluorocarbon and prevents a pipe from being easily removed after the pipe is connected to a device, and a refrigerating device and a heat pump water warming device using the pipe joint in a refrigerant circuit.

To achieve the foregoing objective and in accordance with a first aspect of the present invention, a pipe joint including a joint body, a coupling member, and a fastening jig is provided. The joint body is attached to a device to which a pipe is connected. The coupling member is threaded with the joint body while arranged around the pipe connected to the joint body. Rotational torque is transmitted to the coupling member through the fastening jig. The fastening jig is removably connected to the coupling member in such a manner that rotational torque is transmissible to the coupling member through the fastening jig. The fastening jig has a torque applying portion to which the rotational torque is applied from the exterior. The fastening jig is removed from the coupling member when torque is applied to the torque applying portion of the fastening jig.

In the above-described configuration, by applying the rotational torque to the torque applying portion of the fastening jig connected to the coupling member, the rotational torque is transmitted to the coupling member. This fastens the coupling member to the joint body and the pipe is connected to the pipe joint. The fastening jig is removable from the coupling member. Accordingly, after the coupling member is fastened to the joint body, the fastening jig can be removed from the coupling member and stored at a separate location. This prevents the pipe from being removed easily by any person by loosening the pipe joint. As a result, undesirable leakage of refrigerant gas or release of the gas to the atmosphere, which may be caused by a worker, is avoided. That is, removal of the pipe is requested to a specialized company that stores the fastening jig. In this manner, the regulations on chlorofluorocarbons are complied with and thus the release of the chlorofluorocarbons is reduced.

In the above-described pipe joint, it is preferable that the coupling member and the fastening jig be separate components, and that the fastening jig be selectively attached to and detached from the coupling member when the coupling member is arranged around the pipe or fastened to the joint body. In this case, connection of the pipe is performed in a conventional manner. After the pipe is connected, the fastening jig is removed from the coupling member and stored by the specialized company. In other words, maintenance of the pipe joint to which the pipe is connected is reliably carried out.

In the above-described pipe joint, it is preferable that the fastening jig have a holding surface that is held by a tool. In this case, as in the case of the conventional pipe joint, the pipe is selectively connected and removed using a general tool.

In the above-described pipe joint, it is preferable that the fastening jig have a handle portion that is held by a worker. In this case, the fastening jig can be handled like a tool. That is, the number of the components is decreased and required man-hour is reduced. Also, the fastening jig is rotated directly by the hand and thus operation is simplified.

In the above-described pipe joint, it is preferable that the coupling member have an engaging recess in an end surface of the coupling member opposite to the joint body. The fastening jig is detachably connected to the engaging recess. The fastening jig has a base arranged around the pipe. The base is formed by two separate base portions that clamp the pipe and face each other. An engaging projection engaged with the engaging recess is formed in the base when the two separate base portions are joined together. In this case, the fastening jig is freely attached to or detached from the coupling member after the coupling member is arranged around the pipe.

In the above the pipe joint, it is preferable that the engaging recess be formed by a recess having a polygonal cross section. The engaging projection forms an end portion of the base. The end portion of the base is formed in a polygonal shape in such a manner that the end portion is fitted in the engaging recess. In this case, since the end portion of the base, which configures the fastening jig, forms the projection, the configuration of the fastening jig is simplified.

In the above-described pipe joint, it is preferable that the base be shaped symmetrically with respect to a plane perpendicular to the axis of the base. The holding surface is formed at the axial center of the base. The projection of the fastening jig thus can be fitted in the recess of the coupling member, regardless of the axial position of the fastening jig. This improves the workability when the fastening jig is connected to the coupling member.

In the above-described pipe joint, it is preferable that the engaging recess have a regular polygonal cross section. A cross section of the engaging projection has a regular polygonal shape in such a manner that the engaging projection is fitted in the engaging recess. In this case, regardless of the circumferential position of the fastening jig, the projection of the fastening jig can be fitted in the recess of the coupling member. This improves the workability when the fastening jig is connected to the coupling member.

In the above-described pipe joint, it is preferable that the engaging recess be one of a plurality of recesses having the same shape, and that the recesses be spaced at equal intervals about the axis of the coupling member on an end surface of the coupling member opposite to the joint body. The engaging projection is one of a plurality of projections each fitted in the corresponding one of the recesses. The projections are formed on an end surface of the base facing the coupling member. An outer surface of the base is the holding surface and the outline of the base has a polygonal shape. In this case, the fastening jig can be detachably connected to the coupling member arranged around the pipe. Also, regardless of the circumferential position of the fastening jig, the engaging projections of the fastening jig can be fitted in the engaging recesses of the engaging member. This improves the workability when the fastening jig is connected to the coupling member. Further, the outer surface of the base forming the fastening jig is the torque applying surface and the holding surface that is held by a tool. This simplifies the configuration of the fastening jig.

In the above-described pipe joint, it is preferable that the outline of the base have a regular hexagonal shape. In this case, a general tool for fastening a nut can be used when the fastening jig is fastened or loosened.

In the above-described pipe joint, it is preferable that each of the recesses extend from the end surface of the coupling member opposite to the joint body to an end surface of the coupling member facing the joint body. In this case, each recess can be formed from either the side opposite to the joint body or the side facing the joint body. The space formed between the joint body and the coupling member when the joint body and the coupling member are threaded together is exposed to the exterior through the recesses. If the pipe joint is used under a low temperature, or in a refrigerating device or the like, water in the air between the joint body and the coupling member cools down, liquefies, and freezes. The space between the joint body and the coupling member communicates with the exterior through the threading portion between the joint body and the coupling member. Accordingly, if the space between the joint body and the coupling member is cool, water is supplied from the exterior into the space correspondingly. As the inside of the space becomes cooler, the water becomes liquefied and frozen, thus forming ice, which may develop. The developing ice may produce great force acting on components such as the ferrule and the cam surface and thus deform the components. This may hamper pipe sealing function and pipe holding function. However, according to the present invention, the recesses each forming a relatively large hole communicate with the exterior. The ice is thus discharged from the recesses, and deformation of the components caused by the ice is avoided.

In the above-described pipe joint, it is preferable that each recess have a circular cross section. This facilitates the machining of the recesses.

In the above-described pipe joint, it is preferable that the fastening jig have restraint means that maintains the two separate base portions in a state joined together. In this case, the fastening jig is rotated while the restraint means prevents the two separate base portions from separating from each other.

In the above-described pipe joint, it is preferable that the fastening jig have a hinge through which the two separate base portions are pivotally connected to each other. This facilitates joining of the two separate base portions.

In the above-described pipe joint, it is preferable that the coupling member have a plurality of engaging recesses in an end surface of the coupling member opposite to the joint body, and that the fastening jig be detachably connected to the engaging recesses. The fastening jig has a semi-cylindrical base, a plurality of engaging projections that are formed in an end surface of the base facing the coupling member and engaged with the engaging recesses, and a handle portion formed integrally with the base. The pipe has a circular cross section. The base has a semicircular hole having a radius substantially equal to the radius of the pipe. In this case, the fastening jig is detachably connected to the coupling member arranged around the pipe.

In the above-described pipe joint, it is preferable that the engaging recesses have the same shape, and that the engaging recesses be spaced at equal intervals about the axis of the coupling member on the end surface of the coupling member opposite to the joint body. The engaging projections are engaged with one or more of the engaging recesses. In this case, regardless of the circumferential position of the fastening jig, the engaging projections of the fastening member can be fitted in the engaging recesses of the coupling member. This improves the workability when the fastening jig is connected to the coupling member. Also, the fastening jig may be connected to the coupling member while the handle portion is located at such a position that the fastening jig is easily rotated.

In the above-described pipe joint, it is preferable that the engaging recesses each extend from the end surface of the coupling member opposite to the joint body to an end surface of the coupling member facing the joint body. In this configuration, if the fastening jig is formed by the two separate base portions, the engaging recesses can be machined from either the side opposite to the joint body or the side facing the joint body. Further, the ice developing in the space between the joint body and the coupling member is discharged to the exterior through the engaging recesses, which are the through holes.

In the above-described pipe joint, it is preferable that the engaging recesses each have a circular cross section. This facilitates the machining of the engaging recesses.

In the above-described pipe joint, it is preferable that the joint body have a ferrule, and that a distal end of the ferrule bite into an outer circumferential surface of the pipe so that the space between the joint body and the pipe is sealed. The coupling member has a cam surface that contacts and presses a distal portion of the ferrule to cause the distal portion of the ferrule to bite into the outer circumferential surface of the pipe when the coupling member is threaded with the joint body. Such bite-in type pipe joint is suitable for a device that handles high-pressure fluid.

In the above-described pipe joint, it is preferable that the joint body have a flare receiving surface that contacts and presses a flared portion of the pipe, and that the coupling member have a flare pressing surface that presses the flared portion of the pipe against the flare receiving surface. Such flared pipe joint facilitates temporary removal and reconnecting of the pipe.

To solve the above-described problems, a second aspect of the present invention provides a refrigerating device that employs the above-described pipe joint in a refrigerant circuit of the device.

To solve the above-described problems, a third aspect of the present invention provides a heat pump water warming device that employs the above-described pipe joint in a refrigerant circuit of the device.

In the refrigerating device and the heat pump water warming device, the fastening portion cannot be loosened without permission, and the pipe joint cannot be removed from the pipe joint. Also, leakage of refrigerant from the pipe joint decreases and reliability of the product improves.

### BRIEF DESCRIPTION OF THE DRAWINGS

Fig. 1 is a partial cross-sectional view showing a pipe joint according to a first embodiment of the present invention before the pipe joint is fastened;
Fig. 2 is a perspective view showing a coupling member of the pipe joint;
Fig. 3 is a perspective view showing a fastening jig of the pipe joint;
Figs. 4 are partial cross-sectional views showing the pipe joint in a fastening step, where Fig. 4(a) is a partial cross-sectional view showing the pipe joint when a distal portion of a ferrule contacts a cam surface, Fig. 4(b) is a partial cross-sectional view showing the pipe joint when the ferrule is separate from a coupling member, and Fig. 4(c) is a partial cross-sectional view showing the pipe joint when the coupling member is completely fastened to a joint body;
Fig. 5 is a partial cross-sectional view showing the pipe joint when connection of a pipe by means of the pipe joint is complete;
Fig. 6 is a perspective view showing a coupling member of a pipe joint according to a second embodiment of the present invention;
Fig. 7 is a perspective view showing a fastening jig of the pipe joint;
Fig. 8 is a perspective view showing a coupling member of a pipe joint according to a third embodiment of the present invention;
Fig. 9 is a perspective view showing a fastening jig of the pipe joint;
Fig. 10 is a partial cross-sectional view showing the pipe joint before fastening;
Figs. 11 are views showing a fastening jig of a pipe joint according to a fourth embodiment of the present invention, where Fig. 11(a) is a front view showing the fastening jig before separate base portions are joined together, Fig. 11(b) is a perspective view showing the fastening jig when the separate base portions are joined together as viewed from the side corresponding to the coupling member, and Fig. 11(c) is a perspective view showing the fastening jig when the separate base portions are joined together as viewed from the side opposite to the coupling member;
Fig. 12 is an exploded perspective view showing restraint means of the pipe joint;

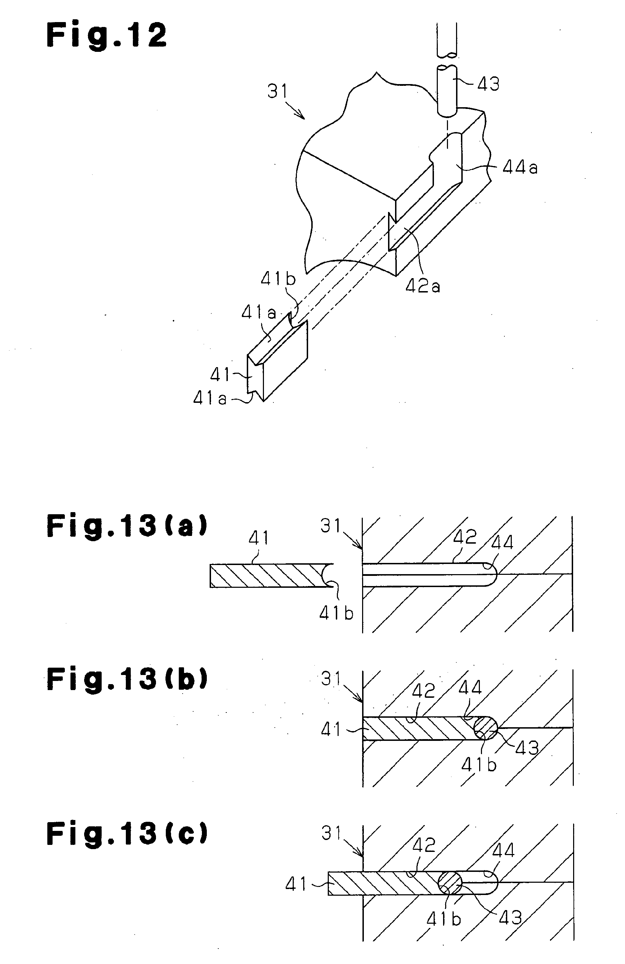

Figs. 13 are enlarged partial cross-sectional views showing an insertion hole, which serves as restraint means, and the surrounding structure, where Fig. 13(a) is a partial cross-sectional view showing the restraint means before a restraint member is inserted into the insertion slot, Fig. 13(b) is a partial cross-sectional view showing the restraint means immediately before the restraint member is pressed out of the insertion slot using a pin, and Fig. 13(c) is a partial cross-sectional view showing the restraint means when the restraint member is being pressed out of the insertion slot using the pin;
Fig. 14 is a partial cross-sectional view showing a pipe joint of a third modification before fastening;
Fig. 15 is a partial cross-sectional view showing the pipe joint when a coupling member is completely fastened to a joint body;
Fig. 16 is a partial cross-sectional view showing the pipe joint when connection of a pipe is completed using the pipe joint;
Fig. 17 is a partial cross-sectional view showing a pipe joint of a fourth modification before fastening;
Fig. 18 is a partial cross-sectional view showing the pipe joint when a coupling member is completely fastened to a joint body;
Fig. 19 is a partial cross-sectional view showing the pipe joint when connection of a pipe is completed using the pipe joint;
Fig. 20 is a partial cross-sectional view showing a pipe joint of a fifth modification when a distal portion of a ferrule contacts a cam surface;
Fig. 21 is a partial cross-sectional view showing a state where a coupling member is completely fastened to a joint body;
Fig. 22 is an enlarged partial cross-sectional view of the ferrule of the pipe joint and the surrounding structure, showing a state in which the ferrule bites into the surface of a pipe;
Fig. 23 is a partial cross-sectional view showing a pipe joint of a sixth modification when a coupling member is completely fastened to a joint body;
Fig. 24 is a partial cross-sectional view showing a pipe joint of a ninth modification when a fastening jig is separated from a pipe;
Fig. 25 is a front view showing the pipe joint illustrated in Fig. 24, as viewed from the side opposite to the joint body;
Fig. 26 is a perspective view showing a fastening jig of the pipe joint; and
Fig. 27 is a partial cross-sectional view showing a pipe joint of tenth modification when a coupling member is fastened completely.

### BEST MODE FOR CARRYING OUT THE INVENTION

Embodiments of the present invention will now be described with reference to the attached drawings. Common reference numerals are given to common components of the drawings and explanation of the components will be omitted or simplified herein.

### (First Embodiment)

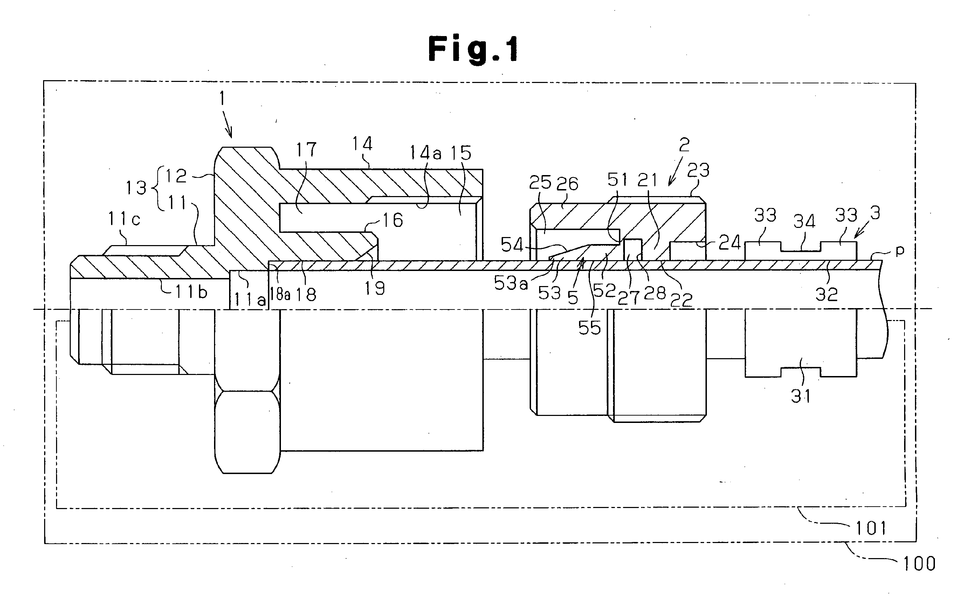

A pipe joint according to a first embodiment of the present invention will hereafter be explained with reference to Figs. 1 to 5. The pipe joint of the first embodiment is a bite-in type pipe joint used in a refrigerant circuit of a refrigerating device or a heat pump water warming device.

As shown in Fig. 1, the pipe joint includes a joint body 1 attached to a device to which a pipe p is connected, a coupling member 2 threaded with the joint body 1, and a fastening jig 3 through which rotational torque is transmitted to the coupling member 2. The coupling member 2 and the fastening jig 3 are independent from each other. The pipe joint is used in a refrigerant circuit 101 of a refrigerating device such as an air conditioner or a heat pump water warming device 100.

The joint body 1 has a base 13 and a tubular portion 14. The base 13 is formed by an attaching portion 11 and a nut portion 12. The attaching portion 11 is attached to a device to which a closing valve or a container or a pipe of the refrigerant circuit is connected. The nut portion 12 is held by a fastening tool when the coupling member 2 is fastened to the joint body 1. An internal thread 14a, which is threaded with the coupling member 2, is formed in the inner circumferential surface of the tubular portion 14. A hollow portion 15 is formed in the tubular portion 14. A shaft portion 16 projecting from the base 13 is provided in the tubular portion 14. A cylindrical recess 17 is formed between the inner circumferential surface of the tubular portion 14 and the outer circumferential surface of the shaft portion 16. A connecting port 18 extending along the axis of the shaft portion 16 is formed at the center of the shaft portion 16. A cam surface 19 is formed at an opening end of the connecting port 18. A communicating hole 11a, which extends from the connecting port 18 toward the attaching portion 11, and a communicating hole 11b with a diameter smaller than the diameter of the communicating hole 11a are provided in the joint body 1. An external thread 11c is formed in the outer circumferential surface of the attaching portion 11.

The diameter of the connecting port 18 is substantially equal to the outer diameter of the pipe p. A stepped portion (a counter bore) 18a is formed between the connecting port 18 and the communicating hole 11a. The stepped portion 18a contacts the distal end of the pipe p and determines the position at which the pipe p is located when inserted.

The cam surface 19 is formed continuously from the connecting port 18. The cam surface 19 is a conical and tapered surface and the diameter of the cam surface 19 becomes greater toward the coupling member 2. The angle between the cam surface 19 and the axis of the connecting port 18 is slightly greater than the angle between a tapered surface 54 of a ferrule 5, which will be described later, and the axis of the connecting port 18.

The coupling member 2 is arranged around the pipe p connected to the joint body 1. The coupling member 2 connects the pipe p with the joint body 1 when threaded with the joint body 1. The outer surface of the coupling member 2 is round in such a manner as to receive no rotational torque from a fastening tool. The coupling member 2 cannot be fastened by a general tool but is connectable to a fastening jig 3. The coupling member 2 receives rotational torque from the fastening jig 3 so as to fasten the coupling member 2.

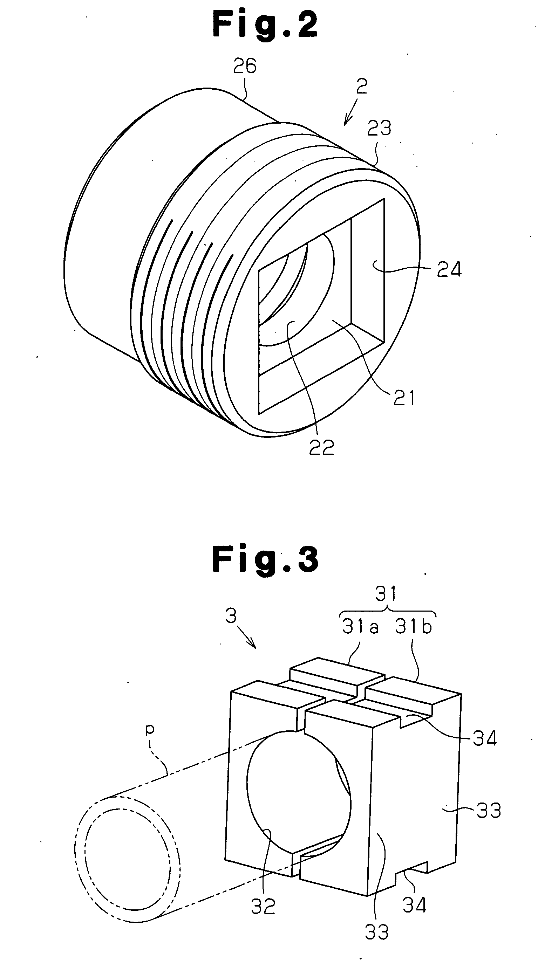

As illustrated in Figs. 1 and 2, the coupling member 2 has a substantially cylindrical shape. The coupling member 2 has a base 21 having a through hole 22 formed at the center of the base 21. An external thread 23, which is threaded with an internal thread 14a of the joint body 1, is formed in the outer circumferential surface of the coupling member 2. A regular tetragonal engaging recess 24 is formed at the center of the coupling member 2. The fastening jig 3 is selectively attached to and removed from the engaging recess 24. A hollow portion 25 having an opening that faces the joint body 1 is provided in the coupling member 2. A ferrule 5 projecting from the base 21 toward the joint body 1 is arranged in the coupling member 2. An outer circumferential wall 26 of the coupling member 2 projects to a position closer to the joint body 1 than the distal end of the ferrule 5. This arrangement prevents damage to the ferrule 5. Since the outer surface of the coupling member 2 is round, the coupling member 2 cannot be held by a general fastening tool.

The ferrule 5 has a conventional structure. Specifically, the ferrule 5 is formed integrally with the coupling member 2 through a thin portion 51, which extends radially from the base 21, at a proximal portion of the ferrule 5. The ferrule 5 includes a cylindrical rear portion 52 and a conical front portion 53. The front portion 53 has a truncated distal portion. A tapered surface (the outer circumferential surface) 54 of the ferrule 5 defines an acute angle with respect to the axis of the ferrule 5. The inclination angle of the tapered surface 54 is slightly smaller than the inclination angle of the cam surface 19 with respect to the axis of the ferrule 5. Specifically, while the inclination angle of the cam surface 19 is approximately 15 to 35 degrees, the inclination angle of the tapered surface 54 of the ferrule 5 with respect to the axis is approximately 10 to 25 degrees. Accordingly, when the ferrule 5 is pressed against the cam surface 19, a distal portion 53a of the ferrule 5 bites into a surface portion of the pipe p. This causes the ferrule 5 to seal the space between the pipe p and the ferrule 5 and maintains the pipe p. A through hole 55, through which the pipe p extends, is formed at the center of the ferrule 5. The diameter of the through hole 55 is equal to the diameter of the aforementioned through hole 22. A pressing surface 28, which presses a rear end surface of the ferrule 5, is provided on the back of the ferrule 5 (the side opposite to the joint body 1). The pressing surface 28 is arranged at such a position that a space 27 is provided between the pressing surface 28 and the ferrule 5.

The fastening jig 3 functions to transmit the rotational torque applied by the manipulator to the coupling member 2. For this purpose, the fastening jig 3 has a rotational torque applying portion to which the rotational torque is applied by the manipulator. The fastening jig 3 is detachably connected to the coupling member 2 after the pipe is connected.

As illustrated in Fig. 3, the fastening jig 3 has a base 31 having a regular tetragonal cross section. A through hole 32 is formed at the center of the base 31. The base 31 is formed by two separate base portions 31a, 31b, which are provided by dividing the base 31 along a plane including the axis of the base 31. The two separate base portions 31a, 31b are provided as an integral body with the pipe p arranged between the separate base portions 31a, 31b. The base 31 is shaped symmetrically with respect to a plane perpendicular to the axis. Both end portions of the base 31 are formed as engaging projections 33, which are fitted in the engaging recess 24 formed in the coupling member 2. Accordingly, the cross section of the base 31 is sized in such a manner that the base 31 is fitted in the engaging recess 24 of the coupling member 2.

A holding surface 34, which is capable of holding the fastening jig 3 through a fastening tool, is formed at the center of a lower portion of the base 31 as the rotational torque applying portion. The holding surface 34 is provided at opposite upper and lower surfaces of the base 31. The interval between the holding surfaces 34 is set to a value suitable for a general fastening tool to hold the holding surfaces 34.

A method for connecting a pipe using the above-described bite-in type pipe joint will hereafter be explained.

When the pipe p is connected to the joint body 1, the joint body 1 is attached to a prescribed component, which is, for example, a pipe, a container, or a closing valve, in a refrigerant circuit of a refrigerating device, such as an air conditioner, or a heat pump water warming device. In the pipe joint, the pipe p is first passed through the through hole 22 of the coupling member 2 and the through hole 55 of the ferrule 5. Subsequently, a distal portion of the pipe p is inserted into the connecting port 18 of the joint body 1 and an end surface of the pipe p is applied onto the stepped portion 18a of the joint body 1. The base 31 is formed by arranging the separate base portions 31a, 31b while facing each other in such a manner that the pipe p is provided between the separate base portions 31a, 31b. The engaging projection 33, which is fitted in the corresponding engaging recess 24 of the coupling member 2, is formed at each end of the base 31.

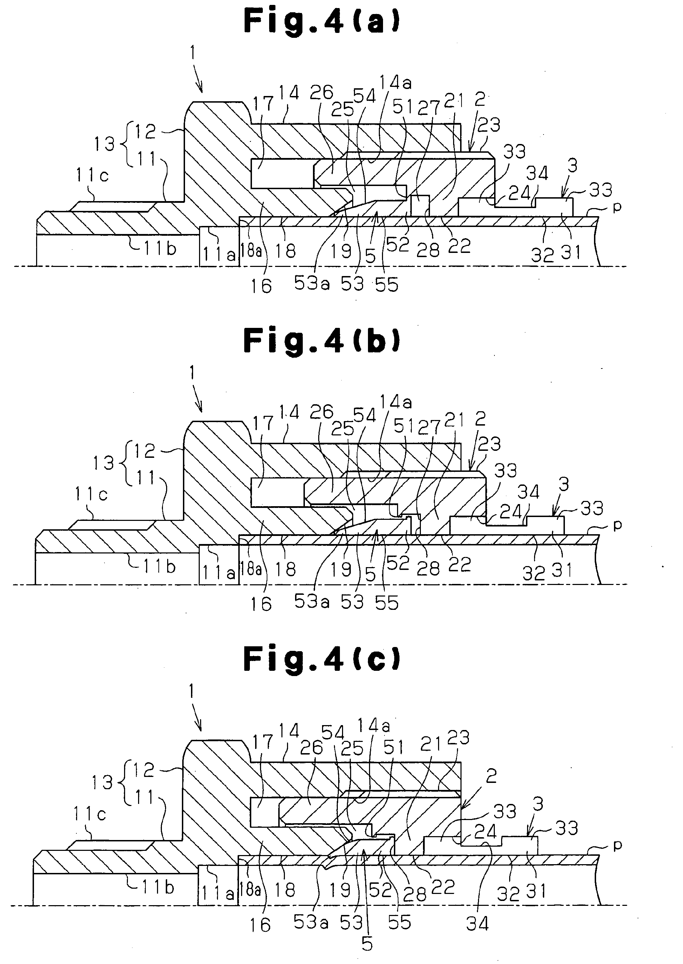

Next, the engaging projections 33 of the fastening jig 3 are fitted in the engaging recess 24 of the coupling member 2. The coupling member 2 is then rotated together with the fastening jig 3, so that the coupling member 2 is threaded with the joint body 1. As illustrated in Fig. 4(a), the coupling member 2, together with the fastening jig 3, can be rotated only by the tips of the fingers until the ferrule 5 contacts the cam surface 19. When the ferrule 5 comes into contact with the cam surface 19, the holding surfaces 34 of the fastening jig 3 are held by a tool and the coupling member 2 is fastened to the joint body 1. The force produced by fastening is transmitted from the cam surface 19 to the distal portion 53a of the ferrule 5 and then the thin portion 51. As a result, as illustrated in Fig. 4(b), the thin portion 51 is cut apart.

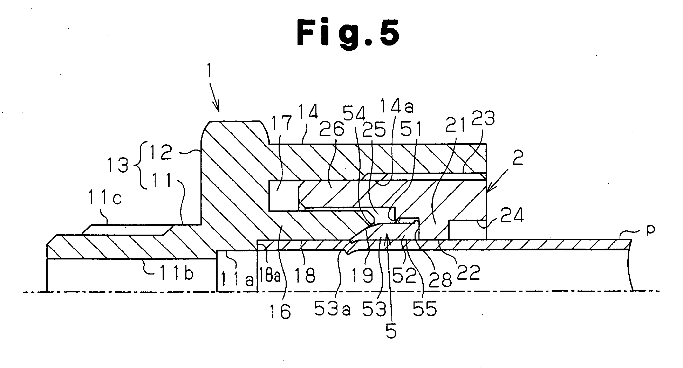

After the thin portion 51 is cut, the pressing surface 28 is brought into contact with the rear end surface of the ferrule 5 by further fastening the coupling member 2. By continuously fastening the coupling member 2 in this state, the rear end surface of the ferrule 5 is pressed by the pressing surface 28. As a result, as illustrated in Fig. 4(c), the distal portion 53a of the ferrule 5 is pressed by and brought into contact with the cam surface 19 and bites into a surface portion of the pipe p. Such deformation of the ferrule 5 seals the space between the tapered surface 54 of the ferrule 5 and the cam surface 19 and the space between the distal portion 53a of the ferrule 5 and the pipe p. The pipe p is thus held by the ferrule 5 and the coupling member 2 is completely fastened to the joint body 1. At this stage, the coupling member 2 is received in the joint body 1 and only an end surface of the coupling member 2 is exposed to the exterior. After such fastening, the fastening jig 3 is removed from the coupling member 2, with reference to Fig. 5, so that connection of the pipe is complete.

After the pipe is connected, there may be times when pipe connecting needs to be redone. However, the coupling member 2 has a round outer surface and is received in the joint body 1. The coupling member 2 thus cannot be loosened with respect to the joint body 1 unless the fastening jig 3 is connected to the coupling member 2. Specifically, as illustrated in Fig. 4(c), the separate base portions 31a, 31b are arranged to face each other to form the base 31. The engaging projections 33 of the base 31 are then inserted in the engaging recess 24 of the coupling member 2 to connect the fastening jig 3 to the coupling member 2. In this state, the holding surfaces 34 of the fastening jig 3 are held by a tool and the coupling member 2 threaded with the joint body 1 is loosened. The pipe p is thus separated from the pipe joint. If a new pipe p is to be connected once the pipe p is

separate, a non-used coupling member 2 needs to be provided since the ferrule 5 that has been used in the previous pipe connecting is unusable. The fastening jig 3 is reusable.

The pipe joint according to the first embodiment, which has the above-described configuration, has the following advantages.
(1) The outer surface of the coupling member 2 is formed round in such a manner that a general tool cannot hold the coupling member 2. Accordingly, the coupling member 2 cannot be fastened or loosened with respect to the joint body 1 unless the fastening jig 3 is connected to the coupling member 2.
(2) The fastening jig 3 having the rotational torque applying portion is connected to the coupling member 2 in such a manner that the rotational torque is transmissible to the coupling member 2 through the fastening jig 3. Accordingly, by applying the rotational torque to the rotational torque applying portion, the rotational torque is transmitted from the rotational torque applying portion of the fastening jig 3 to the coupling member 2. This fastens the coupling member 2 to the joint body 1, and the pipe is connected.
(3) The fastening jig 3 is separable from the coupling member 2. Accordingly, after the coupling member 2 is fastened to the joint body 1, the fastening jig 3 is removed from the coupling member 2 and stored at a separate location. This prevents the threading portion of the pipe joint from being loosened by any person without permission to remove the pipe p. As a result, undesirable leakage of refrigerant gas or release of the refrigerant gas to the atmosphere, which is caused by a nonprofessional worker, is avoided. The pipe p needs to be removed by a specialized company, who stores the fastening jig 3. As a result, regulations of chlorofluorocarbons are complied with, which contributes to reduction of release of the substances to the atmosphere.
(4) The coupling member 2 and the fastening jig 3 are independent from each other. The fastening jig 3 can be detachably connected to the coupling member 2 when the coupling member 2 is arranged around the pipe p or fastened to the joint body 1. As a result, maintenance work of the pipe joint is reliably performed by removing the fastening jig 3 after the connection of the pipe and storing the fastening jig 3 by a specialized company.
(5) The fastening jig 3 has the holding surfaces 34, which can be held by a general tool. Accordingly, by coupling the fastening jig 3 to the coupling member 2, the pipe p is selectively connected to and disconnected from the pipe joint using the tool, as in the case of the conventional pipe joint.
(6) The engaging recess 24 is formed in the coupling member 2. The base 31 is formed by arranging the two separate base portions 31a, 31b to face each other in such a manner that the pipe p is clamped between the separate base portions 31a, 31b. This provides the engaging projections 33, which are engaged with the engaging recess 24 of the coupling member 2, at the two ends of the base 31. As a result, the fastening jig 3 is selectively attached to and detached from the coupling member 2 after the coupling member 2 is arranged around the pipe p.
(7) The engaging recess 24 has a polygonal cross section. The outline of the end (the engaging projection 33) fitted in the engaging recess 24 also has a polygonal shape. It is thus unnecessary to form the engaging projections 33 in the fastening jig 3. The configuration of the fastening jig 3 is thus simplified.
(8) The base 31 is shaped symmetrically with respect to a plane perpendicular to the axis of the base 31. The two ends of the base 31 are formed as the engaging projections 33. The holding surfaces 34 are formed at the axial center of the base 31. Accordingly, regardless of the axial position of the fastening jig 3, the engaging projections 33 of the fastening jig 3 are fitted in the engaging recess 24 of the coupling member 2. This improves the workability when the fastening jig 3 is connected to the coupling member 2.
(9) The cross section of each engaging recess 24 has a regular polygonal shape. Each engaging projection 33 has a regular polygonal shape in such a manner that the engaging projection 33 is fitted in the corresponding engaging recess 24. As a result, regardless of the circumferential position of the fastening jig 3, the engaging projections 33 of the fastening jig 3 are fitted in the engaging recess 24 of the coupling member 2. This enhances the workability when the fastening jig 3 is connected to the coupling member 2.
(10) The pipe joint of the first embodiment is a bite-in type pipe joint having the ferrule 5 and the cam surface 19 and suitable as a device handling high-pressure fluid. Further, since the ferrule 5 is received in the hollow portion 25 of the coupling member 2, the distal portion 53a or the tapered surface 54 of the ferrule 5 cannot be easily damaged when the components are handled.
(11) In the bite-in type pipe joint, the coupling member 2 is fully received in the joint body 1 when connection of the pipe is complete. As a result, the coupling member 2 is prevented from being loosened by a third party after the pipe is connected.
(12) In the refrigerating device and the heat pump water warming device employing the above-described pipe joint, the fastening portion cannot be loosened or the pipe p cannot be removed without permission. This reduces leakage of refrigerant from the pipe joint and improves reliability of the product.

### (Second Embodiment)

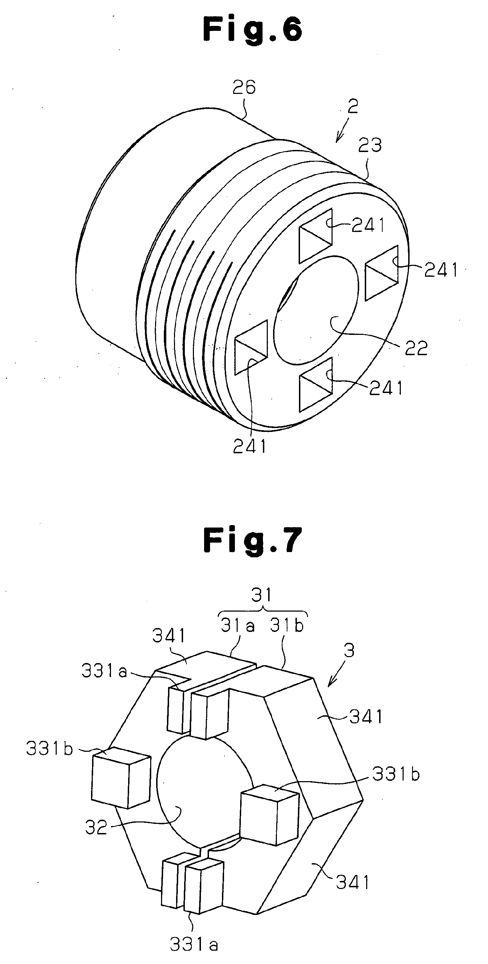

A second embodiment of the present invention is a bite-in type pipe joint as in the case of the first embodiment. In the second embodiment, the connection structure between the coupling member 2 and the fastening jig 3 and the shape of the fastening jig 3 are modified. The mechanism by which the pipe joint connects a pipe is the same as that of the first embodiment. Same or like reference numerals are given to components of the second embodiment that are the same as or like corresponding components of the first embodiment and explanation thereof will be omitted. The second embodiment will hereafter be explained mainly on the difference between the second embodiment and the first embodiment, with reference to Figs. 6 and 7.

The pipe joint of the second embodiment has the joint body 1 that is the same as the joint body 1 of the first embodiment. As illustrated in Fig. 6, in the coupling member 2, four recesses 241 each having a regular tetragonal cross section are provided as engaging recesses 241 through which the coupling member 2 is connected to the fastening jig 3, unlike the first embodiment. The recesses 241 are spaced at equal intervals about the axis of the coupling member 2 at an end surface of the coupling member 2 opposite to the joint body 1.

As illustrated in Fig. 7, the base 31 of the fastening jig 3 is divided into two portions. When two separate base portions 31a, 31b are joined together, an outer surface of the base 31 is provided as holding surfaces 341, or a rotational torque applying portion. In this state, the outline of the base 31 is a regular hexagonal shape. Three opposite pairs of holding surfaces 341 are formed in the base 31. Engaging projections 331a, 331b, which are fitted in corresponding recesses 241 of the coupling member 2, project from the side surface of the base 31 facing the coupling member 2. In other words, the projections 331a, 331b are spaced at equal intervals about the axis of the fastening jig 3 at the end surface of the fastening jig 3 facing the coupling member 2. Each of the projections 331a, 331b has a substantially regular tetragonal cross section in such a manner that the projections 331a, 331b are fitted in the corresponding recesses 241. Two of the four projections 331a are formed when the two separate base portions 31a, 31b face each other.

The pipe joint of the second embodiment, which is constructed as described above, has the following advantages.
(1) The base 31 of the fastening jig 3 is divided into two portions along the plane including the axis of the pipe p. The separate base portions 31a, 31b are arranged around the pipe p while facing each other in such a manner as to clamp the pipe p from both sides of the pipe p. When the separate base portions 31a, 31b are joined together as the base 31, the projections 331a, 331b, which are fitted in the corresponding recesses 241 of the coupling member 2, are formed in the base 31. As a result, in the pipe joint of the second embodiment, the fastening jig 3 is selectively attached to and detached from the coupling member 2 when the coupling member 2 is arranged around the pipe p or arranged around the pipe p and connected to the joint body 1. The second embodiment has advantages equivalent to the advantages (1) to (6) and (10) to (12) of the first embodiment.
(2) The multiple recesses 241 of the coupling member 2 are spaced at equal intervals about the axis of the coupling member 2 at the end surface of the coupling member 2 opposite to the joint body 1. The projections 331a, 331b, which are fitted in the recesses 241, project from the end surface of the base 31 facing the coupling member 2. Further, when the two separate base portions 31a, 31b are joined together, the outer surfaces of the base 31 are provided as the holding surfaces 341, or the torque applying surfaces. As a result, regardless of the circumferential position of the fastening jig 3, the fastening jig 3 is connected to the coupling member 2.
(3) When the separate base portions 31a, 31b are joined together, the outline of the base 31 has a regular hexagonal shape. As a result, a general nut fastening tool can be employed to fasten or loosen the coupling member 2 with respect to the joint body 1.

### (Third Embodiment)

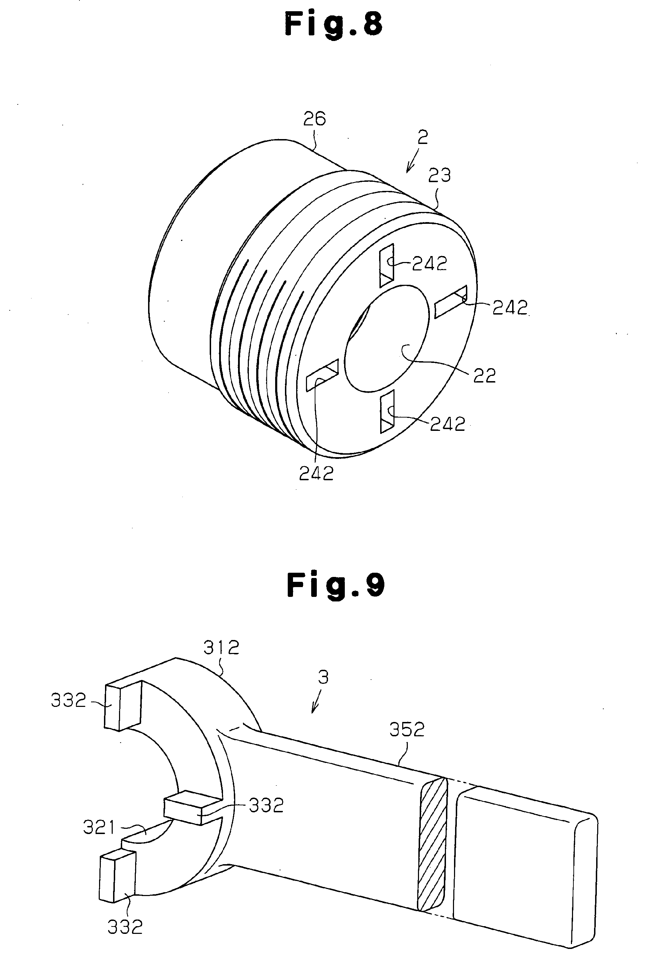

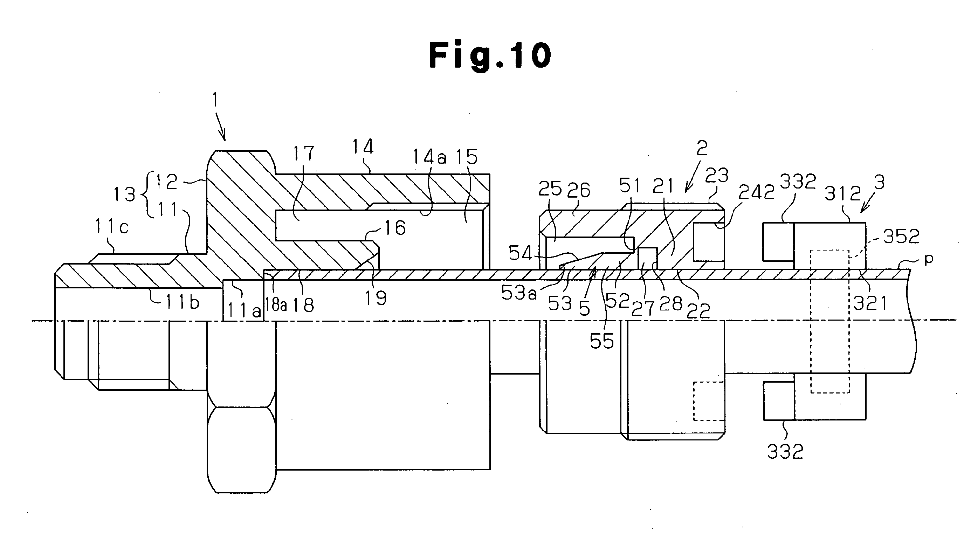

A third embodiment of the present invention is a bite-in type pipe joint as in the cases of the first and second embodiments. In the third embodiment, the connection structure between the coupling member 2 and the fastening jig 3 and the shape of the fastening jig 3 are modified. The mechanism by which the pipe joint connects a pipe is the same as the corresponding mechanisms of the first and second embodiments. Same or like reference numerals are given to components of the third embodiment that are the same as or like corresponding components of the first and second embodiments and explanation thereof will be omitted. The third embodiment will hereafter be explained mainly on the difference between the third embodiment and the first embodiment with reference to Figs. 8 and 10.

The pipe joint of the third embodiment has the joint body 1 that is the same as the joint body 1 of the first embodiment. As illustrated in Fig. 8, in the coupling member 2, four recesses, which are spaced at equal intervals about the axis of the coupling member 2 at the end surface of the coupling member 2 opposite to the joint body, are provided as engaging recesses 242 through which the coupling member 2 is connected to the fastening jig 3, as in the case of the second embodiment. Unlike the second embodiment, each of the recesses 242 has a rectangular cross section.

As shown in Fig. 9, the fastening jig 3 has a semi-cylindrical base 312 and a handle portion 352 serving as a rotational torque applying portion extending laterally from the outer circumferential surface of the base 312. Three engaging projections 332, which project toward the coupling member 2, are formed in an end surface of the base 312. A semi-circular half hole 321, which has a radius substantially equal to the radius of the pipe p, is formed in the base 312. The projections 332 are fitted in three of four recesses 242, which are formed in the coupling member 2. The handle portion 352 is configured similarly to a wrench handle. Specifically, as illustrated in Fig. 10, the fastening jig 3 is arranged around the pipe p, which is located behind the coupling member 2. In other words, the wall of the half hole 321 of the fastening jig 3 is applied onto the outer circumferential surface of the pipe p. The projections 332 of the fastening jig 3 are thus engaged with the recesses 242 of the coupling member 2. Then, by holding the handle portion 352 and rotating the fastening jig 3, the coupling member 2 is fastened to the joint body 1.

The pipe joint of the third embodiment, which is constructed as described above, has the following advantages.
(1) As in the case of the first embodiment, the fastening jig 3 is detachably connected to the coupling member 2 when the coupling member 2 is arranged around the pipe p or when the coupling member 2 is provided around the pipe p and connected to the joint body 1. The pipe joint of the third embodiment thus has advantages equivalent to the advantages (1) to (4), (6), and (10) to (12) of the first embodiment.
(2) The fastening jig 3 has the handle portion 352, or the rotational torque applying portion held by the manipulator. The coupling member 2 is thus fastened to the joint body 1 using the fastening jig 3 like a tool. This reduces the number of the components and decreases required man-hour. Also, the fastening jig 3 is rotated directly by the hand without using a general tool.
(3) The multiple recesses 242, which are spaced at equal intervals about the axis of the coupling member 2 and have the same shape, are provided at the end surface of the coupling member 2 opposite to the joint body 1. The projections 332 of the fastening jig 3 are engaged with three of the four recesses 242 formed in the coupling member 2. As a result, regardless of the circumferential position of the fastening jig 3, the fastening jig 3 is connected to the coupling member 2. Further, the handle portion 352 is arranged at an angle suitable for rotating the fastening jig 3. The fastening jig 3 is thus further easily fastened to the coupling member 2.

### (Fourth Embodiment)

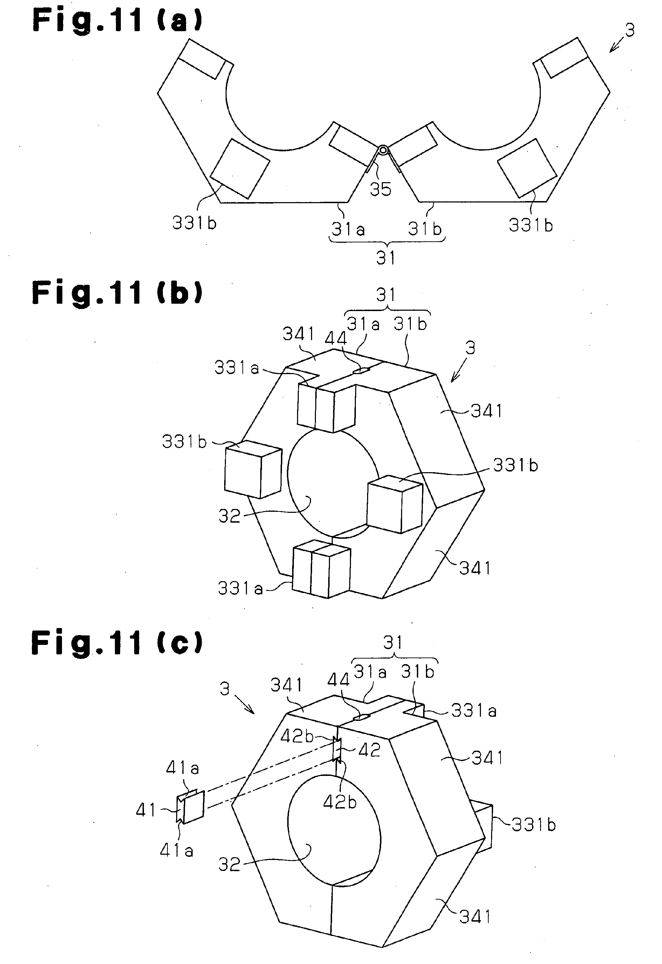

In a fourth embodiment of the present invention, a hinge connecting the two separate base portions together and restraint means maintaining the separate base portions in a state joined together while facing each other are added to the fastening jig 3 of the second embodiment. The remainder of the configuration of the fourth embodiment is the same as the corresponding configuration of the second embodiment. Same or like reference numerals are given to components of the fourth embodiment that are the same as or like corresponding components of the second components and explanation thereof will be omitted. The fourth embodiment will hereafter be described mainly on the difference between the fourth embodiment and the second embodiment, with reference to Figs. 11 to 13.

In the pipe joint of the fourth embodiment, the fastening jig 3 is basically the same as the fastening jig 3 of the second embodiment. Specifically, as illustrated in Figs. 11(a) to 11(c), the fastening jig 3 has the two separate base portions 31a, 31b, which are provided by dividing the base 31 into the two portions. With reference to Fig. 11(b), when the two separate base portions 31a, 31b face each other, the outline of the base 31 is a regular hexagonal shape. Accordingly, the base 31 has three opposite pairs of holding surfaces 341. A plurality of engaging projections 331a, 331b are formed in the end surface of the base 31 facing the coupling member 2. A hinge 35, which pivotally connects the two separate base portions 31a, 31b together, is attached to the fastening jig 3. The hinge 35 may be a conventionally known hinge. Since the hinge 35 is attached to the holding surfaces 341, it is preferred that a hinge with a small projection amount from the holding surfaces 341 be employed.

The configuration of the restraint means of the fourth embodiment will now be explained.

As illustrated in Fig. 11(c), when the two separate base portions 31a, 31b are joined together, an insertion slot 42 into which a plate-like restraint member 41 is inserted is formed in the end surface of the fastening jig 3 opposite to the coupling member 2. An elongated slot 44, into which a pin 43 is inserted, is formed in the holding surface 341 opposed to the hinge 35. By manipulating the pin 43 inserted in the elongated slot 44, the restraint member 41 is removed from the fastening jig 3 by means of the distal end of the pin 43. Like the insertion slot 42, the elongated slot 44 has a cross section extending along the axis of the pipe p. A groove forming the insertion slot 42 and a groove forming the elongated slot 44 are provided in each of the opposite surfaces of the two separate base portions 31a, 31b. The end portion of a groove 42a that forms the insertion slot 42 is shaped like a wedge in such a manner that an end portion 42b of the insertion slot 42 has a V shape. A recess 44a, which forms the elongated slot 44, is provided in such a manner as to allow communication between the end portion of the insertion slot 42 and the elongated slot 44.

The restraint member 41 has a plate-like shape. V-shaped grooves 41a are formed in two side portions of the restraint member 41. When the restraint member 41 is inserted into the insertion slot 42 until the distal end of the restraint member 41 contacts a side wall of the elongated slot 44, the restraint member 41 does not project from the base 31 and the end surface of the restraint member 41 and the end surface of the base 31 are flush with each other. A groove 41b having a semi-circular cross section is formed in an end portion of the restraint member 41. As a result, when the distal end of the restraint member 41 contacts the side wall of the elongated slot 44, a space receiving the distal end of the pin 43 is formed between the groove 41b of the restraint member 41 and the side wall of the elongated slot 44.

The fastening jig, which has the above-described configuration, is used in the following manner.

To connect the fastening jig 3 to the coupling member 2 arranged around the pipe p, the fastening jig 3 is first provided around the pipe p. Specifically, as illustrated in Fig. 11(a), the pipe p is arranged between the two separate base portions 31a, 31b while the separate base portions 31a, 31b are held open. The separate base portions 31a, 31b are then joined together so as to face each other. Then, as illustrated in Fig. 11(c), the restraint member 41 is inserted into the insertion slot 42 from the end surface of the fastening jig 3 opposite to the coupling member 2. This causes engaging between the grooves 41a of the end portions of the restraint member 41 and the end portions 42b of the insertion slot 42. As a result, as long as the restraint member 41 is held in the insertion slot 42, the two separate base portions 31a, 31b are continuously maintained as an integral body without separating from each other. The projections 331a, 331b of the fastening jig 3 are then received in the recesses 241 of the coupling member 2. Subsequently, by holding the holding surfaces 341 and rotating the fastening jig 3, rotational torque is applied to the coupling member 2 as in the case of the second embodiment.

After the rotational torque is applied to the coupling member 2 and thus connection of the pipe p is completed, the pin 43 is inserted into the elongated slot 44 and the distal portion of the pin 43 is passed between the wall of the groove 41b formed at the end portion of the restraint member 41 and the side wall of the elongated slot 44, as illustrated in Fig. 13(b). Then, with reference to Fig. 13(c), the restraint member 41 is pushed out of the insertion slot 42 by means of the distal portion of the pin 43, so that the end portion of the restraint member 41 is projected out of the base 31. Subsequently, the projecting end portion of the restraint member 41 is held manually or by a tool and the restraint member 41 is pulled out of the insertion slot 42. Afterwards, as in the second embodiment, the fastening jig 3 is removed from the coupling member 2, so that connection of the pipe p is completed. When connection of the pipe p needs to be redone, the restraint member 41 is attached to the fastening jig 3 according to the above-described procedure and the fastening jig 3 is detachably connected to the coupling member 2.

In addition to the advantages equivalent to the advantages of the second embodiment, the pipe joint of the fourth embodiment, which is constructed as described above, has the following advantages.
(1) The fastening jig 3 has the restraint means that maintains the two separate base portions 31a, 31b in a state joined together and facing each other. As a result, the base 31 is rotated while inhibiting separation of the two separate base portions 31a, 31b.
(2) Since the two separate base portions 31a, 31b are connected to each other through the hinge 35 in such a manner that the separate base portions 31a, 31b are selectively opened or closed, the separate base portions 31a, 31b are easily joined together.

The illustrated embodiments may be modified in the following forms.

### (First Modification)

Although the holding surfaces 34 of the first embodiment are formed in the two opposite surfaces of the fastening jig 3, the holding surfaces 34 may be provided on other opposite surfaces of the fastening jig 3. Further, although the recess 24 and the projection 33 each have a regular tetragonal cross section, the recess 24 and the projection 33 may have cross sections having other regular polygonal shapes such as regular hexagonal shapes.

### (Second Modification)

Although the recesses 241 and the projections 331a, 331b of the second embodiment each have a regular tetragonal cross section, the recesses 241 and the projections 331a, 331b may have a rectangular cross section. Specifically, the cross sections of the recesses 241 and the projections 331a, 331b each have a regular tetragonal shape in order to facilitate formation of the projections 331a by joining the two separate base portions 31a, 31b together while causing the base portions 31a, 31b to face each other. Also, in the third embodiment, the rectangular cross sections of the recesses 242 and the projections 332 may be modified to regular tetragonal cross sections. Further, in the second and third embodiments, the cross sections of the recesses 241, 242 and the cross sections of the projections 331a, 331b, 332, which are fitted in the corresponding recesses 241, 242, may have any suitable shapes such as circular shapes other than the polygonal shapes.

### (Third Modification)

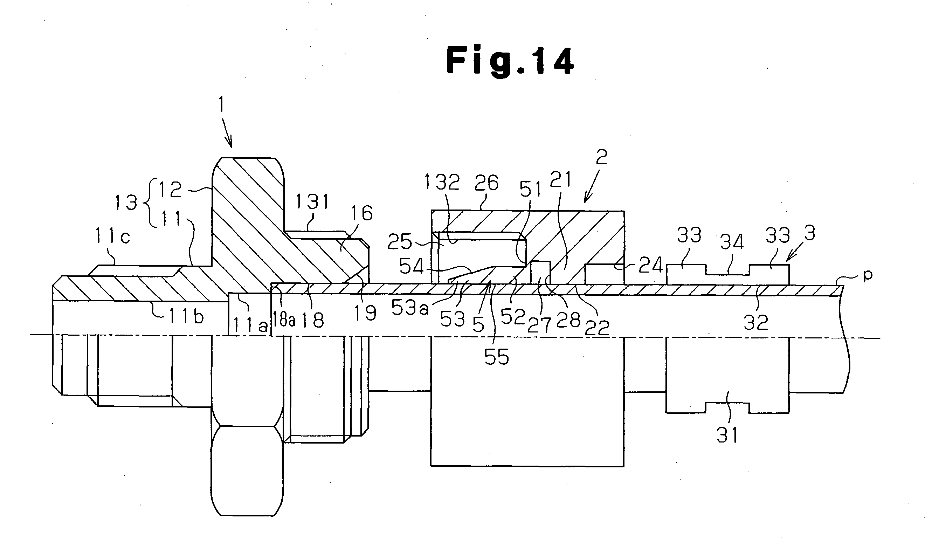

In each of the illustrated embodiments, the threading structure between the joint body 1 and the coupling member 2 may be modified as illustrated in Figs. 14 to 16. Specifically, as illustrated in Fig. 14, the tubular portion 14 may be omitted from the joint body 1 of the first embodiment, and an external thread 131 may be formed in the outer circumferential surface of the shaft portion 16, which projects from the base 13 of the joint body 1. Also, the external thread 23 may be omitted from the outer circumferential surface of the coupling member 2, and an internal thread 132 may be formed in the inner circumferential surface of the outer circumferential wall 26 of the coupling member 2.

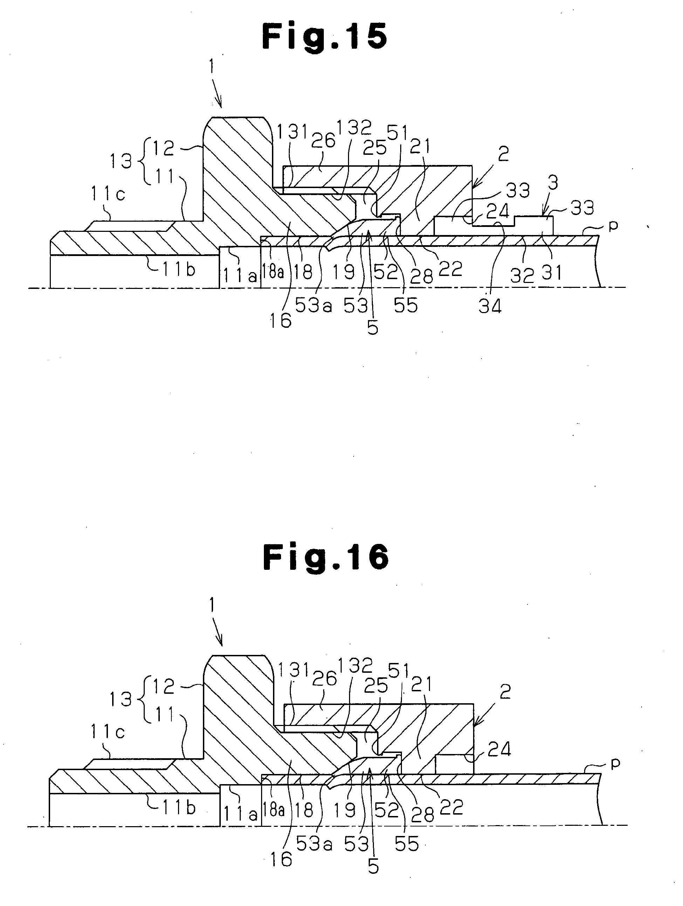

In this modification, the external thread 131 is formed in the joint body 1, and the internal thread 132 is provided in the coupling member 2. In other words, the relationship between the thread of the joint body 1 and the thread of the coupling member 2 is opposite to that of the illustrated embodiments. Also, in the modification, the outer circumferential surface of the coupling member 2 is exposed to the exterior after the coupling member 2 is fastened to the joint body 1 (see Fig. 15) and after the fastening jig 3 is removed from the coupling member 2 afterwards (see Fig. 16). Accordingly, the outline of the coupling member 2 needs to be shaped in such a manner as to prevent the coupling member 2 from being held by a tool.

### (Fourth Modification)

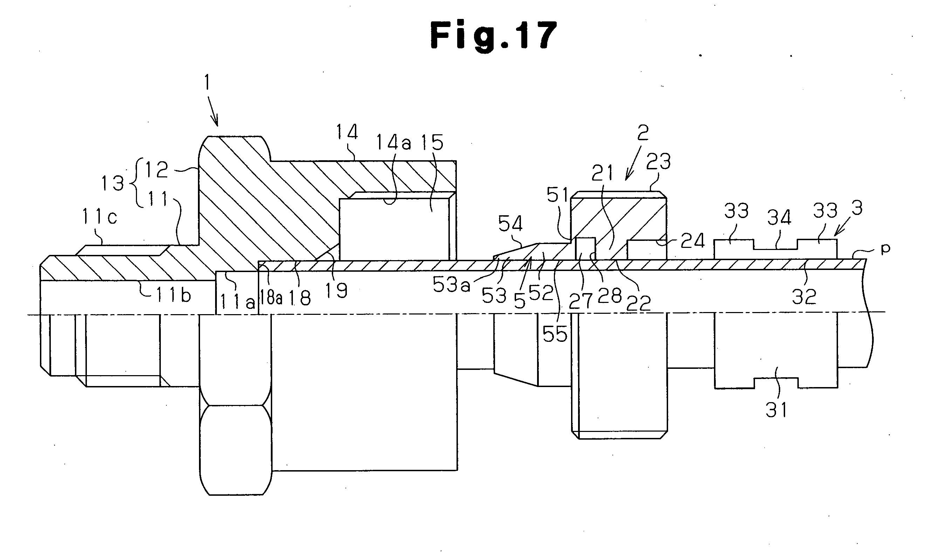

In the illustrated embodiments, the threading structure between the joint body 1 and the coupling member 2 may be modified as illustrated in Figs. 17 to 19. Specifically, as illustrated in Fig. 17, the shaft portion 16 may be omitted from the base 13 of the joint body 1 of the first embodiment, and the cam surface 19 may be formed directly on the opening end of the connecting port 18. Alternatively, the outer circumferential wall 26 may be omitted from the coupling member 2 of the first embodiment.

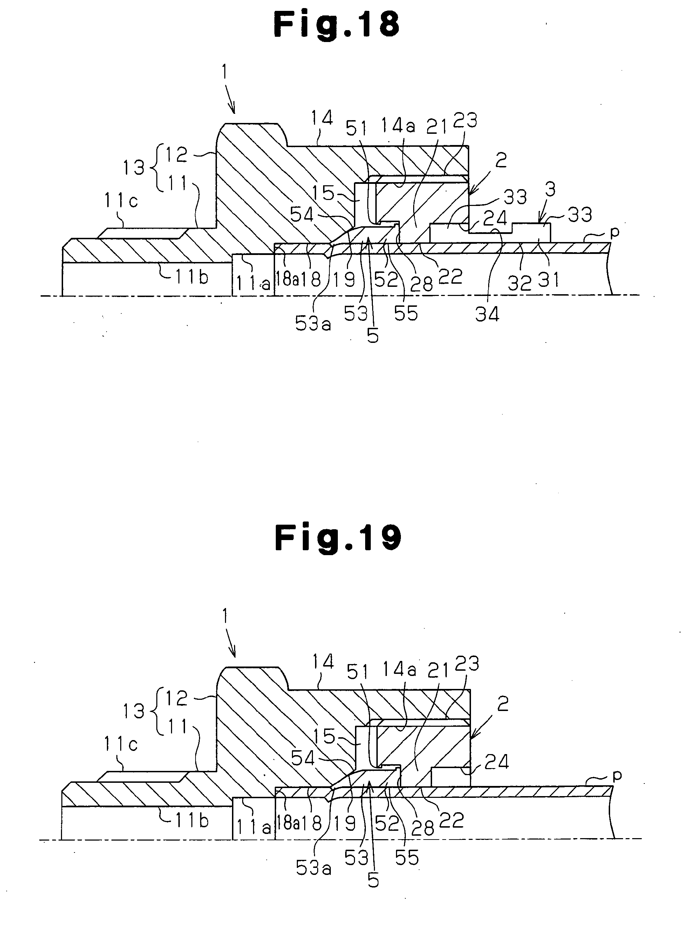

Since the ferrule 5 projects from the base 21 in this modification, the coupling member 2 needs to be handled carefully not to damage the outer surfaces of the distal portion 53a and the tapered surface 54 of the ferrule 5, which influence the pipe sealing function. Also, in the modification, the coupling member 2 is accommodated in the tubular portion 14 of the joint body 1 after the coupling member 2 is fastened to the joint body 1 (see Fig. 18) and after the fastening jig 3 is removed from the coupling member 2 afterwards (see Fig. 19). The modification thus achieves advantages equivalent to those of the first to third embodiments as a structure that prohibits loosening of the coupling member 2 from the joint body 1.

### (Fifth Modification)

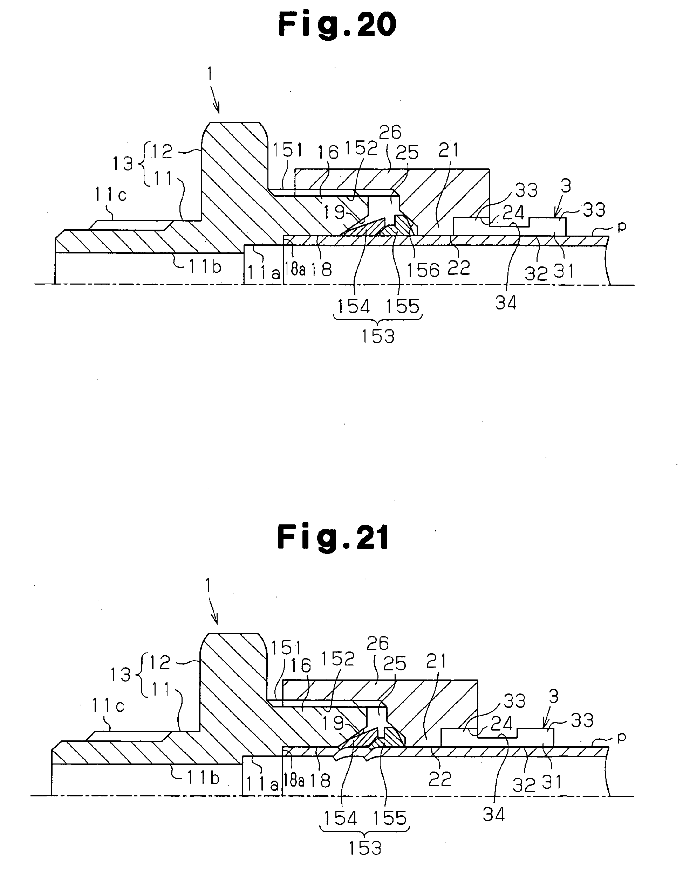

In each of the illustrated embodiments, the threading structure between the joint body 1 and the coupling member 2 may be modified as illustrated in Figs. 20 to 22. Specifically, the ferrule 5 of each embodiment may be replaced by two ferrules that are separate from each other. In this case, as in the third modification, the tubular portion 14 may be omitted from the joint body 1 of the first embodiment, and an external thread 151 may be formed in the outer circumferential surface of the shaft portion 16.

On the other hand, as illustrated in Figs. 20 and 21, the external thread 23 may be omitted from the outer circumferential surface of the coupling member 2 of the first embodiment and an internal thread 152 may be provided in the inner circumferential surface of the outer circumferential wall 26. Also, with reference to Figs. 20 to 22, an independent and general-purpose ferrule 153 may be employed without forming a ferrule integrally with the coupling member.

Specifically, as the independent ferrule 153, a front ferrule 154 having a through hole formed at the center of the ferrule 154 and a back ferrule 155 having a through hole formed at the center of the ferrule 155 are employed. A pressing surface 156, which presses the back ferrule 155, is formed at the end surface of the base 21 of the coupling member 2 facing the joint body 1. The pressing surface 156 is inclined in such a manner that the diameter of the pressing surface 156 becomes greater toward the joint body 1. The pressing surface 156 presses the rear end surface of the back ferrule 155 downward.

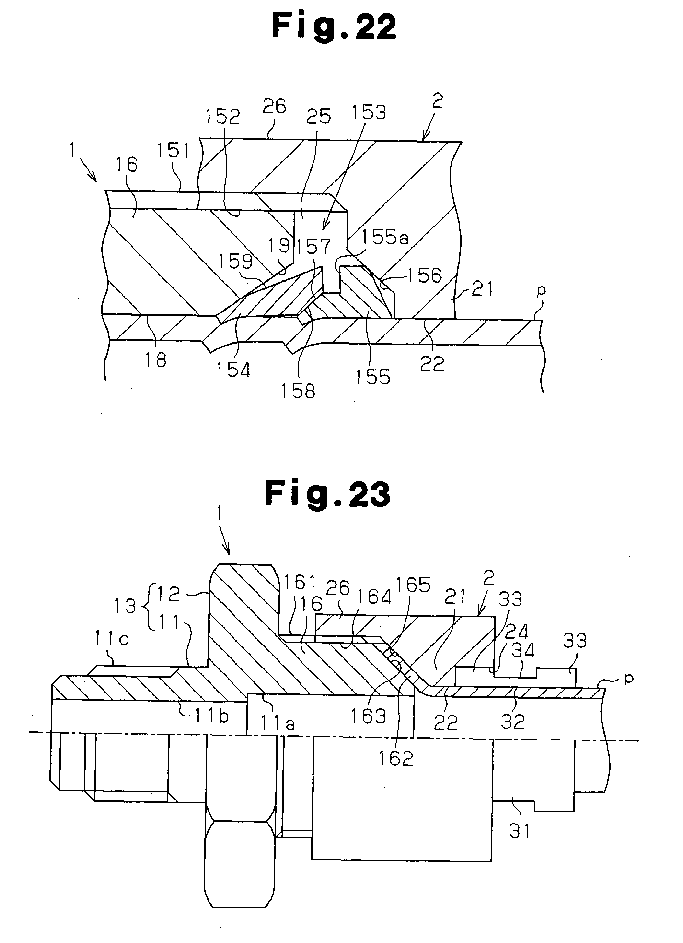

As illustrated in Fig. 22, as the coupling member 2 becomes fastened, the rear end portion of the back ferrule 155 comes into contact with the pressing surface 156 from above and thus becomes pressed downward. The back ferrule 155 has a first tapered surface 157 having a diameter becoming smaller toward the distal end of the back ferrule 155. The first tapered surface 157 presses the rear end portion of the front ferrule 154 upward. In order for the distal portion of the back ferrule 155 to easily bite into the surface of the pipe p when the rear end portion of the front ferrule 154 is pressed upward, the back ferrule 155 has a thin portion in the vicinity of a stepped portion 155a at the side corresponding to the outer periphery of the back ferrule 155. The front ferrule 154 has a second tapered surface 158, which is formed at the rear end portion of the front ferrule 154 and contacts the first tapered surface 157 of the back ferrule 155. A third tapered surface 159, which has a diameter becoming smaller toward the joint body 1, is formed in the distal portion of the front ferrule 154.

In the pipe joint constructed as described above, after the independent ferrule 153 contacts the cam surface 19 as illustrated in Fig. 20, the coupling member 2 is fastened to the joint body 1 using the fastening jig 3. This causes the pressing surface 156 to press the back ferrule 155 downward and against the joint body 1 as illustrated in Fig. 21. The distal portion of the back ferrule 155 thus bites into a surface section of the pipe p. Meanwhile, the first tapered surface 157 of the back ferrule 155 contacts and presses the second tapered surface 158 of the front ferrule 154. The third tapered surface 159 of the front ferrule 154 is thus pressed downward by the cam surface 19, causing the distal portion of the front ferrule 154 to bite into a surface section of the pipe p. As a result, the space between the third tapered surface 159 of the front ferrule 154 and the cam surface 19 of the joint body 1 is sealed. Also, since the front ferrule 154 bites into the pipe p, the space between the surface of the pipe p and the front ferrule 154 is sealed and the pipe p is held by the ferrule 5. Further, since the back ferrule 155 bites into the pipe p, the pipe p is further reliably held by the ferrule 5.

As has been described, the configurations of the joint body 1 and the coupling member 2 of the illustrated embodiments may be simplified and the ferrule 5 may be modified to an independent ferrule. Fig. 21 illustrates the coupling member 2 in a state completely fastened to the joint body 1. The fastening jig 3 is removed from the coupling member 2 after the connection of the pipe is complete. Accordingly, as in the illustrated embodiments, the coupling member 2 is prevented from being loosened by a nonprofessional. Also, in this case, since the independent ferrule 153 formed by the two ferrules is employed, sealing performance of the pipe joint is improved and reliability of the refrigerating device is enhanced. A single independent ferrule may be used instead of an independent ferrule consisting of two ferrules.

### (Sixth Modification)

In the illustrated embodiments, the mechanism by which the joint body 1 and the coupling member 2 join the pipe may be modified as illustrated in Fig. 23. Specifically, the tubular portion 14 and the connecting port 18 are omitted from the joint body 1 of the first embodiment and an external thread 161 is formed in the outer circumferential surface of the shaft portion 16. The communicating hole 11a is extended to the distal end of the shaft portion 16 and a flare receiving surface 163, which contacts a flared portion 162 of the pipe p, is formed in the distal portion of the shaft portion 16. The external thread 23 may be omitted from the coupling member 2 of the first embodiment and an internal thread 164 may be formed in the inner circumferential surface of the outer circumferential wall 26. Further, with reference to Fig. 23, the ferrule 5 may be omitted from the pipe joint of the first embodiment, and a flare pressing surface 165, which contacts and presses the flared portion 162 of the pipe p, may be provided on the end surface of the base 21 facing the joint body 1.

In the flared pipe joint constructed as described above, the pipe p is passed through the through hole 22 of the coupling member 2, so that the coupling member 2 is arranged around the pipe p. Subsequently, using a flaring tool, the flared portion 162 is formed at the distal end of the pipe p. While maintaining the flared portion 162 in contact with the flare receiving surface 163 of the joint body 1, the coupling member 2 is fastened to the joint body 1. When rotational torque caused by fastening reaches a predetermined value, the flared portion 162 is clamped between the flare receiving surface 163 and the flare pressing surface 165, as illustrated in Fig. 23. The coupling member 2 is thus completely fastened and connection of the pipe is accomplished. The flared pipe joint is reusable to redo connection of the pipe. In contrast, in the illustrated embodiments, the pipe joint cannot be reused since the ferrule is deformed. The fastening jig 3 is removed from the coupling member 2 after the coupling member 2 is completely fastened to the joint body 1 also in the case of the flared pipe joint. As a result, the coupling member 2 is prevented from being without permission loosened by a nonprofessional after the connection of the pipe is complete.

### (Seventh Modification)

In the fourth embodiment, instead of employing the plate-like restraint member 41, which is inserted in the insertion slot 42, the two separate base portions 31a, 31b may be joined together at the facing surfaces of the base portions 31a, 31b through a thread. Alternatively, the configuration of the fourth embodiment may be employed in the first embodiment by joining the separate base portions 31a, 31b through a hinge or restricting the separate base portions 31a, 31b by restraint means.

### (Eighth Modification)

Although the coupling member 2 and the fastening jig 3 are separate components in the illustrated embodiments, the coupling member 2 and the fastening jig 3 may be formed as an integral body. Specifically, after the coupling member 2 is fastened to the joint body 1, the fastening jig 3 may be separated from the coupling member 2 through a predetermined level of rotational torque. Further, the fastening jig 3 may be detachably connected to the coupling member 2.

### (Ninth Modification)

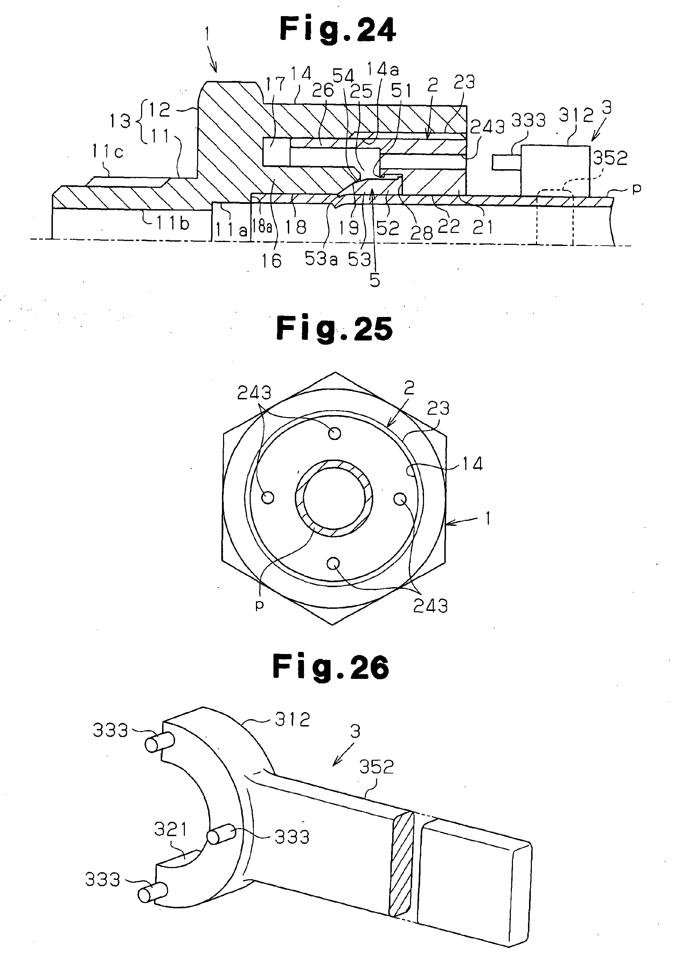

In the third embodiment, each recess 242 may have a circular cross section and/or extend from the end surface of the coupling member 2 opposite to the joint body 1 to the hollow portion 25. In the pipe joint of a ninth modification, which is shown in Figs. 24 to 26, recesses 243 extending from the end surface of the coupling member 2 opposite to the joint body 1 to the hollow portion 25 are formed in the base 21 of the coupling member 2. Also, with reference to Fig. 25, the four recesses 243 each have a circular cross section and are spaced at equal intervals about the axis of the coupling member 2. As illustrated in Fig. 26, in the fastening jig 3 by which the coupling member 2 is fastened, the projections 332 of the fastening jig 3 of the third embodiment, each of which has a rectangular cross section, may be replaced by projections 333 each having a circular cross section.

In this configuration, machining of the recesses 243 may be started from either the end surface opposite to the joint body 1 or the end surface facing the joint body 1. Also, the space formed between the joint body 1 and the coupling member 2 when the joint body 1 and the coupling member 2 are threaded together is exposed to the exterior through the recesses 243. If the recess 242 is not a through hole as in the third embodiment, the space between the joint body 1 and the coupling member 2 is exposed to the exterior through the threading portion between the joint body 1 and the coupling member 2, or the threading portion between the internal thread 14a and the external thread 23. As a result, in the third embodiment, water contained in the air in this space is cooled and liquefied by cold fluid flowing in the pipe p. The water is thus supplied to the space between the joint body 1 and the coupling member 2 through the threading portion. Accordingly, if the air in the space is cooled to a temperature lower than or equal to zero degrees, the water in the air freezes and forms ice. The ice further develops and applies great force to the ferrule 5 or the cam surface 19. In this case, the ferrule 5 or the cam surface 19 may deform and thus lower the pipe sealing function or the pipe holding function. However, since this modification includes the multiple recesses 243, which are relatively large through holes, the water that has been liquefied in the space between the joint body 1 and the coupling member 2 is discharged to the exterior via those of the recesses 243 that are located at a lower positions, before forming ice. Further, even if ice develops in the space between the joint body 1 and the coupling member 2, the ice may escape to the exterior through the recesses 243 each being relatively large. This reduces the influence of the developed ice on components including the ferrule 5 and the cam surface 19. The pipe sealing function and the pipe holding function are thus prevented from lowering.

### (Tenth Modification)

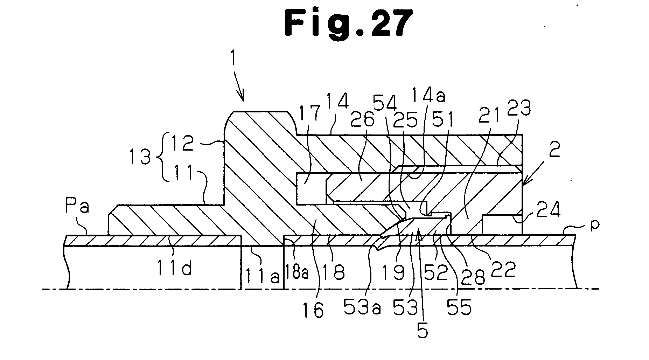

In the joint body 1 of each of the illustrated embodiments, the external thread 11c is formed in the outer circumferential surface of the attaching portion 11. However, the pipe of the device may be connected to the pipe joint through brazing, instead of threading by the external thread 11c. Further, the pipe joint may be connected to a closing valve through brazing. As illustrated in Fig. 27, the attaching portion 11 of the bite-in type pipe joint of the first embodiment may be modified to a pipe brazing type. Same or like reference numerals are given to components of Fig. 27 that are the same as or like corresponding components of the first embodiment and explanation of these components is omitted. Further, a pipe Pa of the device is brazed after being inserted through a connecting port 11d of the joint body 1. In this case, the portion forming the communicating hole 11a forms a stepped portion that positions the distal end of the pipe Pa.

## Claims

1. A pipe joint comprising:
a joint body attached to a device to which a pipe is connected;
a coupling member threaded with the joint body while arranged around the pipe connected to the joint body; and
a fastening jig through which rotational torque is transmitted to the coupling member,
wherein the pipe joint is **characterized in that** the fastening jig is removably connected to the coupling member in such a manner that rotational torque is transmissible to the coupling member through the fastening jig,
wherein the fastening jig has a torque applying portion to which the rotational torque is applied from the exterior, and
wherein the fastening jig is removed from the coupling member when torque is applied to the torque applying portion of the fastening jig.

2. The pipe joint according to claim 1, **characterized in that** the coupling member and the fastening jig are separate components, and
wherein the fastening jig is selectively attached to and detached from the coupling member when the coupling member is arranged around the pipe or fastened to the joint body.

3. The pipe joint according to claim 2, **characterized in that** the fastening jig has a holding surface that is held by a tool.

4. The pipe joint according to claim 2, **characterized in that** the fastening jig has a handle portion that is held by a worker.

5. The pipe joint according to claim 3, **characterized in that** the coupling member has an engaging recess in an end surface of the coupling member opposite to the joint body, the fastening jig being detachably connected to the engaging recess,
wherein the fastening jig has a base arranged around the pipe,
wherein the base is formed by two separate base portions that clamp the pipe and face each other, and
wherein an engaging projection engaged with the engaging recess is formed in the base when the two separate base portions are joined together.

6. The pipe joint according to claim 5, **characterized in that** the engaging recess is formed by a recess having a polygonal cross section,
wherein the engaging projection forms an end portion of the base, and
wherein the end portion of the base is formed in a polygonal shape in such a manner that the end portion is fitted in the engaging recess.

7. The pipe joint according to claim 6, **characterized in that** the base is shaped symmetrically with respect to a plane perpendicular to the axis of the base,
wherein the holding surface is formed at the axial center of the base.

8. The pipe joint according to claims 6 or 7, **characterized in that** the engaging recess has a regular polygonal cross section,
wherein a cross section of the engaging projection has a regular polygonal shape in such a manner that the engaging projection is fitted in the engaging recess.

9. The pipe joint according to claim 5, **characterized in that** the engaging recess is one of a plurality of recesses having the same shape,
wherein the recesses are spaced at equal intervals about the axis of the coupling member on an end surface of the coupling member opposite to the joint body,
wherein the engaging projection is one of a plurality of projections each fitted in the corresponding one of the recesses,
wherein the projections are formed on an end surface of the base facing the coupling member, and
wherein an outer surface of the base is the holding surface and the outline of the base has a polygonal shape.

10. The pipe joint according to claim 9, **characterized in that** the outline of the base has a regular hexagonal shape.

11. The pipe joint according to claims 9 or 10, **characterized in that** each of the recesses extends from the end surface of the coupling member opposite to the joint body to an end surface of the coupling member facing the joint body.

12. The pipe joint according to any one of claims 9 to 11, **characterized in that** each recess has a circular cross section.

13. The pipe joint according to any one of claims 5 to 12, **characterized in that** the fastening jig has restraint means that maintains the two separate base portions in a state joined together.

14. The pipe joint according to any one of claims 5 to 13, **characterized in that** the fastening jig has a hinge through which the two separate base portions are pivotally connected to each other.

15. The pipe joint according to claim 4, **characterized in that** the coupling member has a plurality of engaging recesses in an end surface of the coupling member opposite to the joint body, the fastening jig being detachably connected to the engaging recesses,
wherein the fastening jig has a semi-cylindrical base, a plurality of engaging projections that are formed in an end surface of the base facing the coupling member and engaged with the engaging recesses, and a handle portion formed integrally with the base,
wherein the pipe has a circular cross section, and
wherein the base has a semicircular hole having a radius substantially equal to the radius of the pipe.

16. The pipe joint according to claim 15, **characterized in that** the engaging recesses have the same shape,
wherein the engaging recesses are spaced at equal intervals about the axis of the coupling member on the end surface of the coupling member opposite to the joint body, and
wherein the engaging projections are engaged with one or more of the engaging recesses.

17. The pipe joint according to claim 15 or 16, **characterized in that** the engaging recesses each extend from the end surface of the coupling member opposite to the joint body to an end surface of the coupling member facing the joint body.

18. The pipe joint according to any one of claims 15 to 17, **characterized in that** the engaging recesses each have a circular cross section.

19. The pipe joint according to any one of claims 1 to 18, **characterized in that** the joint body has a ferrule, a distal end of the ferrule biting into an outer circumferential surface of the pipe so that the space between the joint body and the pipe is sealed,
wherein the coupling member has a cam surface that contacts and presses a distal portion of the ferrule to cause the distal portion of the ferrule to bite into the outer circumferential surface of the pipe when the coupling member is threaded with the joint body.

20. The pipe joint according to any one of claims 1 to 18, **characterized in that** the coupling member has a ferrule, a distal end of the ferrule biting into an outer circumferential surface of the pipe, so that the space between the coupling member and the pipe is sealed,
wherein the joint body has a cam surface that contacts and presses a distal portion of the ferrule to cause the distal portion of the ferrule to bite into the outer circumferential surface of the pipe when the coupling member is threaded with the joint body.

21. The pipe joint according to any one of claims 1 to 20, **characterized in that** the joint body has a flare receiving surface that contacts and presses a flared portion of the pipe, wherein the coupling member has a flare pressing surface that presses the flared portion of the pipe against the flare receiving surface.

22. A refrigerating device employing the pipe joint according to any one of claims 1 to 21 in a refrigerant circuit of the device.

23. A heat pump water warming device employing the pipe joint according to any one of claims 1 to 21 in a refrigerant circuit of the device.
